# EUROPÄISCHE PATENTANMELDUNG

(11) **EP 4 239 817 A1**
(43) Veröffentlichungstag der Anmeldung: **06.09.2023**
(21) Anmeldenummer: 23158409.5
(22) Anmeldetag: 24.02.2023
(51) Int. Cl.: H02B 1/30, H02G 3/08, H02G 3/22

(54) **KABELEINFÜHRUNG**

(30) Priorität: 03.03.2022 DE 202022101185 U
(71) Anmelder: OBO Bettermann Hungary Kft., 2347 Bugyi (HU)
(72) Erfinder: Ludwig, Henrik, 58706 Menden (DE); Harms, Heiko, 58708 Menden (DE); Kolert, Sergej, 58119 Hagen (DE); Korte, Thomas, 58708 Menden (DE); Kutschelis, Kevin, 58675 Hemer (DE)
(74) Vertreter: Haverkamp Patentanwälte PartG mbB

(57) **Zusammenfassung**

Die Erfindung betrifft eine Kabeleinführung 1 für ein einer elektrotechnischen Installation dienendes Gehäuse, welche Kabeleinführung 1 eine in einem eine Außenseite 4 und eine Innenseite 11 aufweisenden, insbesondere ungekrümmt ausgeführten Wandabschnitt 2 aus Kunststoff angeordnete Öffnungszone 3 aufweist, wobei die unbenutzte Öffnungszone durch zumindest ein Verschlusssegment 7 verschlossen und dergestalt ausgelegt ist, damit bezüglich ihres Querschnittes unterschiedlich dimensionierte Kabel durch die Kabeleinführung 1 hindurch und in ein solches Gehäuse eingeführt werden können. Besonders Kennzeichen ist, dass die Öffnungszone 3 bezüglich ihrer Formgebung aus zumindest einem durch eine Langachse und eine asymmetrisch zur Langachse angeordnete Kurzachse hinsichtlich seines Umrisses definierten Formelement 6 gebildet ist.

## Beschreibung

Gegenstand der Erfindung ist eine Kabeleinführung für ein einer elektrotechnischen Installation dienendes Gehäuse, welche Kabeleinführung eine in einem eine Außenseite und eine Innenseite aufweisenden, insbesondere ungekrümmt ausgeführten Wandabschnitt aus Kunststoff angeordnete Öffnungszone aufweist, wobei die unbenutzte Öffnungszone durch zumindest ein Verschlusssegment verschlossen und dergestalt ausgelegt ist, damit bezüglich ihres Querschnittes unterschiedlich dimensionierte Kabel durch die Kabeleinführung in ein solches Gehäuse eingeführt werden können.

Elektrotechnischen Installationen dienende Gehäuse sind beispielsweise Installationsdosen wie Unterputzdosen, Hohlwanddosen oder dergleichen, aber auch Abzweigdosen, Schaltkästen oder dergleichen. Diesen Gehäusen ist gemein, dass Kabel oder Leerrohre durch die Wand des Gehäuses zum Anschließen an darin enthaltenen elektrischen und/oder elektronischen Geräten oder Aggregaten eingeführt werden sollen. Zu diesem Zweck verfügen derartige Gehäuse über vorbereitete Kabeleinführungen, durch die von außen Kabel oder Leerrohre in das Gehäuseinnere eingeführt werden können. Derartige Gehäuse sind typischerweise aus einem formstabilen Kunststoff hergestellt. Die Kabeleinführungen verfügen über eine Öffnungszone. Dies weist, der Auslegung der Kabel bzw. Leerrohre nachempfunden, eine kreisrunde Umrissgeometrie auf. Die Öffnungszone stellt mithin eine Durchbrechung in einer Wand des Gehäuses dar. Der Durchmesser der Öffnungszone ist größer als der Durchmesser eines einzuführenden Kabels oder Leerrohres. Ein solches Gehäuse verfügt typischerweise über mehrere derartiger Kabeleinführungen. Diese sind zunächst verschlossen. Geöffnet werden nur diejenigen, die bei der Installation benötigt werden. Zum Verschließen der Öffnungszone einer solchen Kabeleinführung dient gemäß einer möglichen Ausgestaltung einer solchen Kabeleinführung ein Ausbrechstück. Dieses ist über Materialstege mit dem die Öffnungszone umgebenden Wandabschnitt des Gehäuses verbunden. Diese Materialbrücken dienen als Trennstege. Zum Öffnen einer solchen Kabeleinführung werden die Trennstege zertrennt, damit das Verschlusssegment entfernt werden kann. Um bei einer solchen Konzeption einer Kabeleinführung Kabel oder Leerrohre mit unterschiedlichem Durchmesser hindurchführen zu können, ohne dass bei im Durchmesser kleineren Kabeln oder Rohren ein übermäßig weiter Ringspalt verbleibt, sind Kabeleinführungen entwickelt worden, bei denen das vorstehend beschriebene Verschlusssegment als Verschlusssegmentteil selbst wenigstens ein konzentrisch angeordnetes Verschlusssegmentteil trägt. Dieses ist in gleicher Weise durch Materialbrücken an das äußere Verschlusssegmentteil angeschlossen. Beide Verschlusssegmentteile bilden das die Öffnungszone verschließende Verschlusssegment. Wird nur eine im Durchmesser kleinere Öffnung bei einer Kabeleinführung benötigt, wird lediglich das innere Verschlusssegmentteil herausgebrochen. Durchaus möglich sind auch Ausgestaltungen mit mehr als zwei konzentrisch zueinander angeordneten Verschlusssegmentteilen. Gemäß einer anderen Ausgestaltung zum Verschließen der einer Kabeleinführung dienenden Öffnungszone eines solchen Gehäuses ist diese mit einer elastischen Weichkunststoffmembran überspannt. Bei einer solchen Ausgestaltung stellt die Weichkunststoffmembran das Verschlusssegment dar. Derartige Verschlusssegmente werden eingesetzt, wenn eine Kabel- oder Leerrohreinführung eine gewisse Winddichtigkeit aufweisen soll. Konzentrisch zueinander angeordnete erhabene Wülste kennzeichnen den vorgesehenen Einsteckbereich zum Ein- bzw. Durchstecken eines Kabels oder Leerrohres.

In manchen Fällen wird gefordert, dass die in ein solches Gehäuse eingeführten Kabel in einer solchen Kabeleinführung mit einer gewissen Rückhaltekraft gehalten sind, damit das durch die Kabeleinführung hindurchgeführte Kabel oder Leerrohr nicht unbeabsichtigt wieder herausgezogen werden kann. Zudem wird üblicherweise gefordert, dass das Gehäuse auch im Bereich einer Kabeleinführung den erforderlichen Schutzgrad aufweist, mithin ein Eindringen von Fremdkörpern verhindert ist. Angegeben wird dieses zu einem Gehäuse mit der sogenannten Schutzart IP (Ingress Protection) gemäß DIN EN 60529.

Nicht unproblematisch sind Kabeleinführungen der vorbeschriebenen Art, wenn durch diese Kabel mit einer Querschnittsgeometrie eingeführt werden sollen, die von der üblichen kreisrunden Querschnittsgeometrie abweichen. Dieses ist beispielsweise bei Flachkabeln oder auch Doppel- oder Mehrfachkabeln der Fall, bei denen die mehreren Kabel nebeneinander angeordnet und miteinander verbunden sind. Überdies besteht mitunter die Anforderung, in ein solches Gehäuse ein mit einem Stecker ausgerüstetes Kabel einzuführen. Bei derartigen Kabeln handelt es sich beispielsweise um Kabel für elektronische Anwendungen, wie beispielsweise Netzwerkkabel oder dergleichen. Sollen derartige Kabel in eine einer elektrotechnischen Installation dienendes Gehäuse, wie beispielsweise eine Installationsdose eingeführt werden, muss, wenn dieses die Querschnittsdimensionierung eines solchen Kabels oder Steckers überhaupt zulässt, um durch die Öffnungszone der Kabeleinführung hindurchzupassen, in aller Regel die größtmögliche Öffnung geschaffen werden. Bei nicht rotationssymmetrischen Kabeln und auch bei mit Steckern ausgerüsteten Kabeln hat dies zur Folge, dass ein relativ großer Bereich der Öffnungszone durch das Kabel nicht gefüllt ist und somit offenbleibt. Bei derartigen Kabeln wirken daher die für runde Kabel eingesetzten Rückhaltemechanismen nicht.

Ausgehend von diesem diskutierten Stand der Technik liegt der Erfindung daher die Aufgabe zu Grunde, eine Kabeleinführung für ein einer elektrotechnischen Installation dienendes Gehäuse vorzuschlagen, die als Universalkabeleinführung und somit gleichermaßen für runde oder nicht runde Kabel ebenso wie solche, die mit Steckern ausgerüstet sind, genutzt werden kann und durch die trotzt der unterschiedlichen Geometrie möglicher durch die Kabeleinführung durchzuführender Kabel oder Leerrohre eine Rückhaltung gegeben ist.

Gelöst wird diese Aufgabe erfindungsgemäß zum einen durch eine eingangs genannte, gattungsgemäße Kabeleinführung, bei der die Öffnungszone bezüglich ihrer Formgebung aus zumindest einem durch eine Langachse und eine asymmetrisch zur Langachse angeordnete Kurzachse hinsichtlich seines Umrisses definierten Formelement gebildet ist.

Gelöst wird diese Aufgabe erfindungsgemäß auch durch eine eingangs genannte, gattungsgemäße Kabeleinführung, bei der die Öffnungszone bezüglich ihrer Formgebung aus zumindest zwei, jeweils durch ein durch eine Langachse und eine Kurzachse hinsichtlich seines Umrisses definierten Formelementen gebildet ist, welche Formelemente in Bezug auf ihre Langachse winklig zueinander angeordnet sind.

Eine Kabeleinführung gemäß dem ersten Lösungsvorschlag zeichnet sich durch eine besondere Formgebung ihrer Öffnungszone aus. Diese ist durch Vorsehen des vorstehend definierten Formelementes nicht rotationssymmetrisch. Definiert ist die Formgebung der Öffnungszone durch zumindest ein Formelement, welches durch eine Langachse und zumindest eine Kurzachse definiert ist, wobei die Kurzachse quer zur Langachse verläuft und asymmetrisch bezüglich der Längserstreckung der Langachse angeordnet ist. Dieses bedeutet, dass sich die quer zur Längserstreckung der Langachse angeordnete Kurzachse zu dem einen Ende der Langachse einen geringeren Abstand aufweist als zu dem anderen. Damit weist eine Öffnungszone mit einem solchen Umriss zumindest einen Abschnitt größerer Weite und einen Abschnitt geringerer Weite auf. Eine typische Auslegung eines solchen Formelementes ist beispielsweise eiförmig oder dreieckförmig, wobei diese Angaben nur beispielhaft zu verstehen sind. Eine Vielzahl weiterer Formgebungsmöglichkeiten stehen einem Fachmann zur Umsetzung offen. Daher eignet sich diese Öffnungszone zum Einführen von Langgut (Kabeln oder Leerrohren) mit einer rotationssymmetrischen Querschnittsgeometrie ebenso von Flachkabeln oder Doppel- bzw. Mehrfachkabeln. Auch eignet sich eine solche Öffnungszone durch seine Langachse zum Hindurchführen eines mit einem Stecker ausgerüsteten Kabels. Zumeist sind derartige Stecker, beispielsweise USB-Stecker oder LAN-Stecker in ihrer Querschnittsgeometrie rechteckförmig und können somit problemlos durch eine solchermaßen konzipierte Öffnungszone hindurchgeführt werden.

Eine solche Öffnungszone kann, wie bereits vorstehend angemerkt, beispielsweise oval oder eiförmig ausgelegt sein. Bei einer solchen Ausgestaltung der Öffnungszone nimmt die lichte Weite von dem Bereich der maximalen lichten Weite in Richtung zu zumindest einem Ende hin ab. Bei einer solchen Ausgestaltung dient der Öffnungszonenbereich mit der größeren lichteren Weite zum Einführen im Durchmesser größerer Kabel. Im Durchmesser kleinere Kabel können in dem oder den Abschnitten der Öffnungszone mit der geringeren lichten Weite positioniert werden. In beiden Fällen ist es möglich, dass, was in einem bevorzugten Ausführungsbeispiel vorgesehen ist, mit dem Vorgang einer Kabeleinführung zumindest ein Abschnitt der die Öffnungszone einfassenden Wandbereiche zur Innenseite des Wandabschnittes hin ausgestellt wird, sodass dieser dann widerhakenartig an der Außenseite des eingeführten Langgutes, beispielsweise des Kabels anliegt. Vorzugsweise ist die Kabeleinführung hinsichtlich ihrer lichten Weite so an das hindurchzuführende Langgut angepasst bzw. letzteres innerhalb der Öffnungszone so positioniert, dass ein solcher Wandabschnitt jeweils an bezüglich des Langgutes gegenüberliegenden Seiten ausgestellt und an der Außenseite anliegt. Zur Unterstützung einer solchen Ausstellung von die Öffnungszone einfassenden Randabschnitten des Wandabschnittes ist dieser zumindest in dem die Öffnungszone umgebenen Bereich abweichend von der Mantelkrümmung einer beispielsweise ansonsten zylindrisch ausgeführten Installationsdose ungekrümmt.

Bei dem zweiten Lösungsvorschlag ist die Öffnungszone durch zumindest zwei ebenfalls nicht rotationssymmetrische Formelemente gebildet. Diese sind jeweils durch eine Langachse und eine Kurzachse definiert. Da bei dieser Ausführung die beiden Formelemente winklig bezüglich ihrer Langachse zueinander angeordnet sind, beispielsweise längs und quer zueinander verlaufend, kann ein solches Formelement über die Erstreckung der Langachse auch eine gleichbleibende lichte Weite aufweisen. Ein typisches Beispiel eines solchen Formelementes ist eine Rechteckform, so dass die Öffnungszone nach Art eines Winkelstückes oder auch beispielsweise nach Art eines Kreuzes oder eines Doppelkreuzes ausgeführt sein kann. Die Abschnitte des eine solche Öffnungszone einfassenden Wandabschnittes, die den oder einen Innenwinkel der Öffnungszone einfassen, sind dann der oder diejenigen Abschnitte, die bei Einführung eines Kabels nach innen ausgestellt und für eine Rückhaltefunktion verantwortlich sind.

Es versteht sich, dass wie auch bei vorbekannten Kabeleinführungen die lichte Weite der Öffnungszone an die Geometrie und den Durchmesser einzuführender Kabel oder Leerrohre angepasst ist. Insofern ist eine solche Kabeleinführung zwar als Universaleinführung anzusprechen, jedoch muss an die Geometrie bzw. der Durchmesser eines durch die Kabeleinführung hindurchzuführenden Langgutes an die Dimensionierung der Öffnungszone angepasst sein, darf mithin eine gewisse Größe nicht überschreiten, weil dann das Langgut schlichtweg durch die Öffnungszone nicht hindurchpasst, und, zumindest wenn eine Rückhaltefunktion gewünscht wird, darf auch eine gewisse Mindestgröße nicht unterschreiten.

Beide Lösungsvorschläge erlauben nicht nur die Bereitstellung der gewünschten Rückhaltefunktion, sondern auch, dass eine Kabeleinführung, wenn durch die Einführung eines Kabels genutzt, auch ein Eindringschutz gemäß der Schutzart IP mit dem gewünschten Schutzgrad infolge der besonderen Auslegung der Umrissgeometrie der Öffnungszone bereitgestellt ist.

Eine Langguteinführung wird gemäß einem bevorzugten Ausführungsbeispiel erleichtert, wenn sich die Öffnungszone zumindest weitgehend in einer Einmuldung (Vertiefung) der Außenseite des Wandabschnittes befindet. Eine solche Einmuldung weißt gemäß einem Ausführungsbeispiel eine kreisförmige Umrissgeometrie auf. Vorzugsweise handelt es sich hierbei um eine Materialverdünnung des Wandabschnittes zum Zentrum der Einmuldung hin. Die Materialverdünnung erfolgt ausschließlich ausgehend von der Außenseite des Wandabschnittes, sodass diesbezüglich der Verlauf der Innenseite des Wandabschnittes durch diese Materialverdünnung unbeeinflusst bleibt. Erreicht wird hierdurch, dass sich ein Nach-Innen-Ausstellen von die Öffnungszone einfassenden Randabschnitten zum Zentrum der Einmuldung hin mit einem geringeren Kraftaufwand möglich ist, was wiederum die Rückhaltefunktionalität verbessert. Durch diesen oder diese nach innen ausgestellten Abschnitte des die Öffnungszone einfassenden Randes des Wandabschnittes wird eine Rückhaltefunktionalität bereitgestellt, da diese typischerweise nur zu einem relativ geringen Maße ausgestellten Randabschnitte nach Art von Widerhaken einen Auszug des Langgutes, also beispielsweise des eines Kabels verhindern, zumindest jedoch erschweren. Die Ausstellung dieser Randabschnitte des Wandschnittes erfolgt vorzugsweise nur soweit, dass die zunächst der Außenseite des Wandabschnittes zugeordnete Kante des nach innen ausgestellten Randabschnittes auf die Mantelfläche des eingeführten Langgutes, beispielsweise des Kabels wirkt und sich im Falle eines Kabels etwas in seinen Mantel eingedrückt ist. Bezüglich einer Belegung der Öffnungszone ist es bei einer solchen Ausgestaltung vorteilhaft, die Umrissgeometrie so zu wählen, dass im Zentrum der Einmuldung die vorgesehene Position für die Einführung eines im Durchmesser bzw. in seiner Dimensionierung kleineren Langgutes vorgesehen ist. Der vorbeschriebene Effekt lässt sich auch erreichen, wenn die außenseitige Einmuldung des Wandabschnittes ohne Materialverdünnung ausgeführt ist. Diese Ausgestaltung wird man wählen, wenn eine höhere Eindrückkraft möglich und eine höhere Rückhaltkraft gewünscht wird.

Zur Positionierung unterschiedlich dimensionierter Langgüter innerhalb der Öffnungszone zum Erreichen der vorstehend umrissenen Rückhaltefunktionalität kann auch zumindest ein die Öffnungszone bei Nichtgebrauch verschließendes Verschlusssegment dienen. Ein solches Verschlusssegment ist gelenkig an den die Öffnungszone einfassenden Wandabschnitt angeschlossen, und zwar an einem in Richtung der Langachse der Öffnungszone weisenden Ende. Dieser gelenkige Anschluss, beispielsweise durch eine Materialausdünnung nach Art eines Filmscharniers bereitgestellt, trägt Sorge dafür, dass bei einer Kabeleinführung das Verschlusssegment zur Innenseite des Wandabschnittes und damit ins Innere des Gehäuses hin einklappt. Dieses hat nicht nur den Vorteil, dass kein Abfall bei einer Kabeleinführung anfällt, wie dieses bei Kabeleinführungen des Standes der Technik der Fall ist, sondern auch, dass infolge einer möglichen Fehlöffnung der Öffnungszone einer Kabeleinführung das Verschlusssegment wieder in seine die Öffnungszone verschließende Position zurückgestellt werden kann. Ein solches Verschlusssegment ist typischerweise bis auf den Abschnitt des Scharniers durch einen umlaufenden Spalt von dem Material der durch den Wandabschnitt gebildeten Einfassung der Öffnungszone getrennt. Typischerweise sind ein oder mehrere Trennstege vorgesehen, um die die Öffnungszone verschließende Position des Verschlusssegmentes bei Nichtgebrauch zu sichern. Bei einer Kabeleinführung werden diese durchtrennt oder durchgerissen, sodass das Verschlusssegment zur Innenseite des Wandabschnittes eingeklappt werden kann. Das oder die Verschlusssegmente sind typischerweise materialeinheitlich mit dem Wandabschnitt und somit einstückig mit diesem hergestellt.

Typischerweise ist ein solches Verschlusssegment in zumindest zwei durch zwischengeschaltete Scharniere gegeneinander verstellbare Verschlusssegmentteile unterteilt. Die Unterteilung erfolgt vorzugsweise in Richtung der Langachse der Öffnungszone, sodass die zumindest eine Schwenkachse zwischen zwei Verschlusssegmentteilen quer dazu verläuft. Soll durch die Öffnungszone beispielsweise ein kleiner dimensioniertes Kabel durchgeführt werden, welches in dem Abschnitt der Öffnungszone mit einer geringeren lichten Weite zu positionieren ist, wird bei einem solchermaßen ausgebildeten Verschlusssegment nur das von dem Scharnier entferntere Verschlusssegmentteil zur Innenseite des Wandabschnittes hin umgeklappt, sodass dann von der Öffnungszone nur der zum Einführen des kleiner dimensionierten Kabels benötigte Freiraum geschaffen ist. Bei Einführung eines größer dimensionierten Kabels wird das gesamte Verschlusssegment zur Innenseite des Wandabschnittes geklappt. Aufgrund seines größeren Durchmessers positioniert sich dieses automatisch in dem Öffnungszonenbereich mit der größeren lichten Weite. Die Teilung derartiger Verschlusssegmente in Verschlusssegmentteile erlaubt, wenn beispielsweise nur ein ein freies Ende eines Verschlusssegmentes bildendes Verschlusssegmentteil zum Einführen eines Kabels geöffnet werden muss, dass die übrigen Verschlusssegmentteile, mittels Randstegen an den Wandabschnitt angeschlossen, in ihrer Position verbleiben und damit trotz der Möglichkeit, die Kabeleinführung zum Einführen unterschiedlich dimensionierter Kabel nutzen zu können, ein Eingriffschutz immer gewährleistet ist.

Eine solche Öffnungszone verfügt typischerweise über mehrere derartiger Formelemente, die sich zur Gesamtform der Öffnungszone ergänzen. Das Vorsehen von mehreren Formelementen dieser Art zur Ausbildung der Öffnungszone erhöht die Variabilität in Bezug auf die Möglichkeiten einer Einführung unterschiedlich dimensionierter Langgüter, wie Kabel oder Leerrohre. Ist eine Öffnungszone beispielsweise durch zwei nebeneinanderliegende und ineinander übergehende Formelemente dieser Art bereitgestellt, besteht die Möglichkeit, durch ein und dieselbe Kabeleinführung nicht nur mehrere einzelne Kabel einzuführen, sondern auch ein entsprechend breites Flachkabel, welches nicht durch den Öffnungszonenbereich nur eines Formelementes hindurchgepasst hätte. Gleiches gilt für ein Einführen von an ein Kabel angeschlossene Stecker.

Das wenigstens eine, die Öffnungszone bildende Formelement kann neben den bereits angegebenen Umrissgeometrien auch dreieckförmig, trapezförmig oder rechteckförmig ausgeführt sein. Wenn mehrere Formelemente dieser Art zu einer insgesamt größeren Öffnungszone miteinander kombiniert werden, können diese in einer Reihenanordnung nebeneinander positioniert sein. Auch besteht die Möglichkeit, derartige einzelne oder auch kombinierte Formelemente in einer Queranordnung oder einer kombinierten Anordnung zueinander vorzusehen, sodass die Öffnungszone nach Art eines Kreuzes ausgeführt ist. Eine Vielzahl von Formgestaltungen sind möglich. Die vorstehend angegebenen Ausgestaltungen stellen nur einzelnen Beispiele dar.

In einer bevorzugten Ausgestaltung ist die Öffnungszone ausgeführt, dass diese in Richtung ihrer Langachse im Bereich ihrer Mitte tailliert ist. Dieses kann beispielsweise dadurch erreicht werden, dass zwei eiförmige Formelemente mit ihrer verjüngten Seite ineinander übergehen. Die Taillierung erfolgt vorzugsweise von beiden Langseitenrändern der Öffnungszone her. Infolge einer solchen Taillierung kann die Öffnungszone eine knochenförmige Umrissgeometrie aufweisen. Die die Taillierung bildenden Randabschnitte sind beispielsweise konvex gewölbt. Die Taillierung geht kontinuierlich in die beiden ineinander übergehenden Formelemente über.

Das Vorsehen einer solchen Taillierung der Öffnungszone, mithin eine Ausbildung derselben, bei der diese im äußeren Bereich jeweils eine größere lichte Weite und im zentralen Bereich - dem Bereich der Taillierung - eine geringere lichte Weite aufweist, bietet auch für im Durchmesser kleinere Kabel, die sodann im Zentrum der Öffnungszone positioniert werden, einen ausreichenden Rückhalt. Eine Kabeleinführung für ein solches dünneres, in der Mitte einer solchen Öffnungszone zu positionierendes Kabel ist besonders vorteilhaft bei einer Ausgestaltung der Kabeleinführung, bei der sich die Öffnungszone in einer Einmuldung der Außenseite des Wandabschnittes befindet und diese durch eine Materialverdünnung bereitgestellt ist. Typischerweise kann auf ein von außen durch die Kabeleinführung einzuführendes Kabel geringeren Durchmessers nur ein geringerer Einsteckdruck ausgeübt werden. Kompensiert wird dieses durch die in diesem Bereich geringere Materialstärke des Wandabschnittes.

Vorteilhaft bei der Konzeption der Öffnungszone mit einer Taillierung ist auch, dass sich diese in besonderem Maße zum Einführen von Doppelkabeln eignet. Die Taillierung folgt bei einem solchen Kabel der Mantelfläche des Doppelkabels. Neben der vorbeschriebenen Rückhaltefunktionalität ist selbst bei Einführung eines solchen Kabels ein Eingriffschutz gewährleistet.

Die Kabeleinführung kann Bestandteil eines solchen einer elektrotechnischen Installation dienenden Gehäuses sein. Durchaus möglich ist auch eine Ausgestaltung, bei der der Wandabschnitt mit seiner Kabeleinführung als eigenständiges Teil hergestellt wird und erst bei Bedarf in eine entsprechende Kabeleinführungsöffnung eines solchen Gehäuses eingesetzt wird. Dann besteht die Möglichkeit, in Abhängigkeit von der Dimensionierung des einzuführenden Langgutes einen Kabeleinführungseinsatz mit einer entsprechend dimensionierten Öffnungszone in die Kabeleinführungsöffnung einzusetzen. Bei einer solchen Auslegung der Kabelführung wird man bezüglich der Geometrie der Öffnungszone unterschiedliche Kabeleinführungseinsätze zur Verfügung stellen bzw. zur Verfügung haben und dann für den jeweiligen Zweck den geeigneten auswählen.

Eine solche separat hergestellte Kabeleinführung kann in einer hierfür vorgesehenen Kabeleinführungsöffnung eines Gehäuses beispielsweise durch eine Rastung gehalten sein.

Bei der Auslegung einer Kabeleinführung als separates Bauteil, einzusetzen in eine Kabeleinführungsöffnung eines Gehäuses für elektrotechnische Installationen, kann die Kabeleinführung auch als geteilte Kabeleinführung ausgeführt sein. Typischerweise ist diese dann zweigeteilt, wobei die Trennebene quer zur Ebene des Wandabschnittes verläuft. Es versteht sich, dass die Kabeleinführung auch mehrteilig, das heißt mehr als zweiteilig ausgeführt sein kann. Bei einer solchen Ausführung können diese Kabeleinführungsteile entweder durch den Einsatz in eine Kabeleinführungsöffnung eines Gehäuses oder durch an diese angeformte komplementäre Verbindungsglieder zusammengehalten sein. In letzterem Fall werden die Kabeleinführungsteile miteinander in Eingriff gestellt und anschließend in eine Kabeleinführungsöffnung eines Gehäuses der in Rede stehenden Art montiert.

Nachfolgend ist die Erfindung anhand von Ausführungsbeispielen unter Bezugnahme auf die beigefügten Figuren beschrieben. Es zeigen:
- **Fig. 1:**: eine perspektivische Ansicht einer Kabeleinführung gemäß einem ersten Ausführungsbeispiel, bei dem die Öffnungszone durch Verschlusssegmente verschlossen ist,
- **Fig. 2:**: die Kabeleinführung der Figur 1 in einer Draufsicht sowie in einem Längs- und einem Querschnitt,
- **Fig. 2a:**: eine Schnittdarstellung entsprechend dem Schnitt A-A der Figur 2 mit einem in die Kabeleinführung eingesetzten Kabel,
- **Fig. 3:**: die Kabeleinführung der Figuren 1 und 2 als Teil einer Hohlwanddose,
- **Fig. 4:**: eine perspektivische Ansicht einer Kabeleinführung gemäß einem zweiten Ausführungsbeispiel, bei dem die Öffnungszone durch eine Weichkunststoffmembran verschlossen ist,
- **Fig. 5:**: die Kabeleinführung der Figur 4 in einer Draufsicht sowie in einem Längs- und einem Querschnitt,
- **Fig. 6:**: eine perspektivische Ansicht einer Kabeleinführung gemäß einem dritten Ausführungsbeispiel, bei dem die Öffnungszone durch Verschlusssegmente verschlossen ist,
- **Fig. 7:**: die Kabeleinführung der Figur 6 in einer Draufsicht sowie in einem Längs- und einem Querschnitt,
- **Fig. 8:**: eine perspektivische Ansicht einer Kabeleinführung gemäß einem vierten Ausführungsbeispiel, bei dem die Öffnungszone durch eine Weichkunststoffmembran verschlossen ist,
- **Fig. 9:**: die Kabeleinführung der Figur 8 in einer Draufsicht sowie in einem Längs- und einem Querschnitt,
- **Fig. 10:**: eine perspektivische Ansicht einer Kabeleinführung gemäß einem fünften Ausführungsbeispiel, bei dem die Öffnungszone durch Verschlusssegmente verschlossen ist,
- **Fig. 11:**: die Kabeleinführung der Figur 10 in einer Draufsicht sowie in einem Längs- und einem Querschnitt,
- **Fig. 12:**: eine perspektivische Ansicht einer Kabeleinführung gemäß einem sechsten Ausführungsbeispiel, bei dem die Öffnungszone durch eine Weichkunststoffmembran verschlossen ist,
- **Fig. 13:**: die Kabeleinführung der Figur 12 in einer Draufsicht sowie in einem Längs- und einem Querschnitt,
- **Fig. 14:**: eine perspektivische Ansicht einer Kabeleinführung gemäß einem siebten Ausführungsbeispiel, bei dem die Öffnungszone durch Verschlusssegmente verschlossen ist,
- **Fig. 15:**: die Kabeleinführung der Figur 14 in einer Draufsicht sowie in einem Längs- und einem Querschnitt,
- **Fig. 16:**: eine perspektivische Ansicht einer Kabeleinführung gemäß einem achten Ausführungsbeispiel, bei dem die Öffnungszone durch eine Weichkunststoffmembran verschlossen ist,
- **Fig. 17:**: die Kabeleinführung der Figur 16 in einer Draufsicht sowie in einem Längs- und einem Querschnitt,
- **Fig. 18:**: eine perspektivische Ansicht einer Kabeleinführung gemäß einem neunten Ausführungsbeispiel, bei dem die Öffnungszone durch Verschlusssegmente verschlossen ist,
- **Fig. 19:**: die Kabeleinführung der Figur 18 in einer Draufsicht sowie in einem Längs- und einem Querschnitt,
- **Fig. 20:**: eine perspektivische Ansicht einer Kabeleinführung gemäß einem zehnten Ausführungsbeispiel, bei dem die Öffnungszone durch eine Weichkunststoffmembran verschlossen ist, und
- **Fig. 21:**: die Kabeleinführung der Figur 20 in einer Draufsicht sowie in einem Längs- und einem Querschnitt.

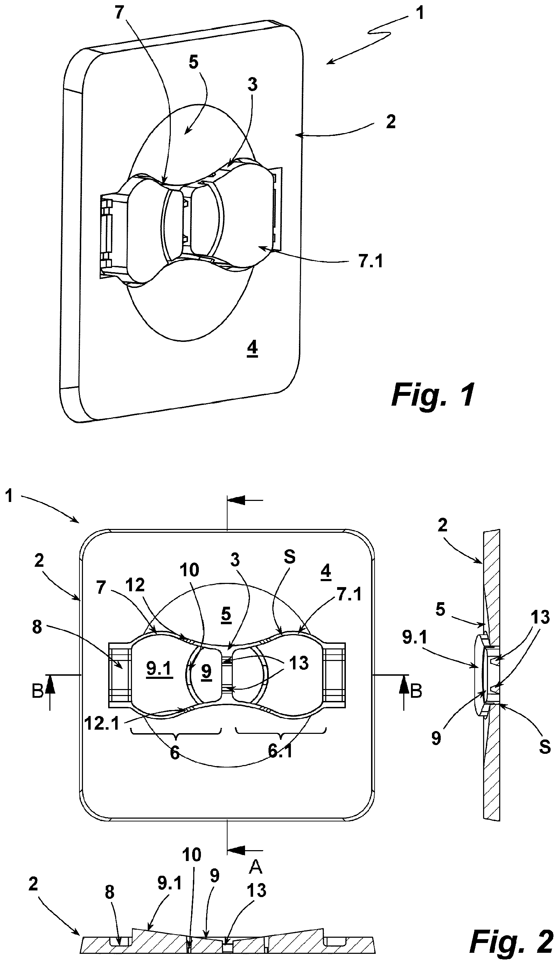

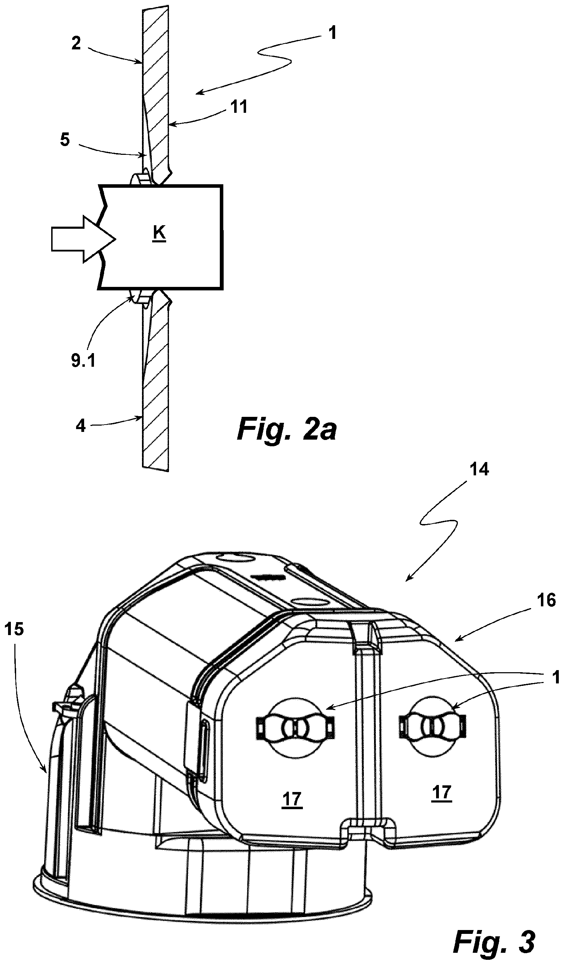

Eine erste Kabeleinführung 1 umfasst einen ungekrümmt ausgeführten Wandabschnitt 2. Dieser kann Teil eines einer elektrotechnischen Installation dienendem Gehäuse sein. Der Wandabschnitt 2 ist aus einem formstabilen Kunststoff hergestellt, und zwar einem Kunststoff, wie dieser typischerweise für Installationsdosen dieser Art verwendet wird. In den Wandabschnitt 2 ist eine Öffnungszone 3 als Wanddurchbrechung eingebracht. Die Öffnungszone 3 bzw. der größte Teil der Öffnungszone 3 befindet sich bei diesem Ausführungsbeispiel in einer in die Außenseite 4 des Wandabschnitts 2 eingebrachte Einmuldung 5. Die Einmuldung 5 weist eine kreisrunde Umrissgeometrie auf. Deren Auslegung ist dem Querschnitt der Figur 2 zu entnehmen. Die Einmuldung 5 ist bei dem dargestellten Ausführungsbeispiel durch eine Materialverdünnung ausgeführt. Die Materialverdünnung, ausschließlich ausgehend von der Außenseite 4 des Wandabschnittes 2, erfolgt sukzessive ausgehend von dem Rand der Einmuldung 5 zu ihrem Zentrum hin.

Die Öffnungszone 3 der Kabeleinführung 1 weist eine etwa knochenförmige Umrissgeometrie auf. Diese Form der Öffnungszone 3 wird gebildet aus zwei ineinander übergehenden, jeweils nach Art eines eiförmigen Ovals geformten Formelementen 6, 6.1. Diese gehen mit ihrem verjüngten Endabschnitt ineinander über, wodurch die Öffnungszone 3 in der Mitte eine geringere lichte Weite aufweist und infolge des kontinuierlichen Überganges in die Öffnungszonenbereiche mit einer größeren lichten Weite tailliert ist. Die Formelemente 6, 6.1 des dargestellten Ausführungsbeispiels sind in Querrichtung zur Längserstreckung der Öffnungszone 3 spiegelsymmetrisch zueinander ausgeführt. Das Formelement 6 ist aufgrund der vorbeschriebenen Umrissgeometrie nicht rotationssymmetrisch und durch eine Langachse (diese erstreckt sich in Richtung des Schnittes B-B) und eine dazu quer verlaufende Kurzachse (diese erstreckt sich in Richtung des Schnittes A-A) definiert. Durch die Kurzachse wird die maximale lichte Weite des Formelementes 6 bestimmt. Die Kurzachse ist asymmetrisch zur Längserstreckung der Langachse angeordnet. Gleiches gilt auch für die die lichte Weite im Bereich der Taillierung angeordnete Kurzachse.

Die Öffnungszone 3 der Kabeleinführung 1 ist durch zwei Verschlusssegmente 7, 7.1 verschlossen, wenn die Kabeleinführung 1 ungenutzt ist. Das Verschlusssegment 7 ist durch ein durch eine Materialverdünnung gebildetes Filmscharnier 8 (s. auch Längsschnitt der Figur 2) an den Wandabschnitt 2 angeschlossen. Das Verschlusssegment 7 ist materialeinheitlich mit dem Wandabschnitt gefertigt. Das Verschlusssegment 7 verfügt über zwei Verschlusssegmentteile 9, 9.1. Das Verschlusssegmentteil 9.1 füllt das Formelement 6 der Öffnungszone 3 in dem Bereich mit der größeren lichten Weite. Das Verschlusssegmentteil 9 befindet sich im Bereich der Taillierung der Öffnungszone 3 und stellt das freie Ende des Verschlusssegmentes 7 dar. Die beiden Verschlusssegmentteile 9, 9.1 sind durch ein Filmscharnier 10 miteinander verbunden. Die Filmscharniere 8, 10 sind im Bereich der Innenseite 11 des Wandabschnittes 2 angeordnet. Dieses erlaubt eine Verschwenkung des Verschlusssegmentteils 9 gegenüber dem Verschlusssegmentteil 9.1 zur Innenseite 11 des Wandabschnittes hin. Gleiches gilt für die Verschwenkbarkeit des Verschlusssegmentteils 9.1 mit dem Verschlusssegmentteil 9 und damit bezüglich des Verschlusssegmentes 7 gegenüber dem Wandabschnitt 2.

Die Trennung der beiden Verschlusssegmente 9, 9.1 erfolgt entlang eines Kreissegmentes, wobei der zum Verschlusssegmentteil 9.1 weisende Rand des Verschlusssegmentteils 9 konvex und der komplementäre Rand des Verschlusssegmentteils 9.1 konkav ausgeführt sind. Um die gewünschte Scharnierbarkeit zu erreichen, befindet sich das Filmscharnier 10 begrenzt auf einen mittleren Abschnitt der zueinander komplementären Seiten der Verschlusssegmente 9 bzw. 9.1.

Die Verschlusssegmente 7, 7.1 sind von einem Spalt S umgeben, der diese von dem die Öffnungszone 3 einfassenden Rand des Wandabschnittes 2 beabstandet.

Das Verschlusssegment 7 ist über sein Verschlusssegmentteil 9 mittels zweier einander gegenüberliegender Trennstege 12, 12.1 an den Wandabschnitt angeschlossen. Beide Verschlusssegmente 7, 7.1 sind ebenfalls über Trennstege 13 miteinander verbunden. Das Verschlusssegment 7.1 ist genauso aufgebaut, weshalb die vorstehenden Ausführungen zu dem Verschlusssegment 7 gleichermaßen für das Verschlusssegment 7.1 gelten.

Soll durch die Kabeleinführung 1 ein Kabel K geringeren Durchmessers mit runder Querschnittsgeometrie als die maximale lichte Weite der Öffnungszone 3 hindurchgeführt werden, wird man hierfür die beiden im Bereich der Taillierung der Öffnungszone 3 angeordneten Verschlusssegmentteile 9 durch Trennen der Trennstege 13 nach innen einklappen. Es ist dann eine Einstecköffnung für ein einzusetzendes Kabel bereitgestellt. Dieses kann manuell oder mit Hilfe eines Werkzeuges oder auch mittels des Kabels selbst vorgenommen werden. Der Durchmesser des Kabels K ist größer als die lichte Weite der Öffnungszone 3 im Bereich ihrer Taillierung, so dass sich die die Taillierung bildenden Randabschnitte des Wandabschnittes 2, dem Durchmesser des Kabels K entsprechend, nach innen ausstellen. Gezeigt ist diese Situation in Figur 2a. Die nach innen ausgestellten Wandabschnitte des Wandabschnittes 2 wirken sodann mit ihrer zuvor nach außen weisenden Kante gegen die Mantelfläche des Kabels K. Diese wirken sodann mit ihrer zunächst nach außen weisenden Kante gegen die Mantelfläche des eingeführten Kabels und bilden wirksame Widerhaken, die die Rückhaltefunktionalität der Kabeleinführung 1 begründen. Auch bei einer Einführung beispielsweise eines Doppelkabels ist die Taillierung für die gewünschte Rückhaltefunktionalität ebenso verantwortlich wie zur Bereitstellung des gewünschten Eingriffschutzes.

Soll durch die Kabeleinführung 1 beispielsweise ein Flachkabel eingeführt werden, werden beide Verschlusssegmente 7, 7.1 geöffnet, d.h.: um die Filmscharniere 8 zur Innenseite 11 des Wandabschnittes 2 eingeklappt. Auch für ein solches Kabel können die die Taillierung einfassenden Randabschnitte der Öffnungszone 3, wie vorstehend anhand des Kabels K beschrieben, nach innen ausgestellt und als Widerhakenelemente gegen die Außenseite des eingeführten Kabels wirken. Zum Einführen eines im Durchmesser größeren runden Kabels oder eines Doppelkabels kann es ausreichend sein, lediglich ein Verschlusssegment 7 oder 7.1 zu öffnen. Auch bei einer solchen Verwendung der Kabeleinführung 1 dienen Teile der Taillierung der Öffnungszone 3 zum Einrichten der vorbeschriebenen Rückhaltefunktionalität. Ergänzend oder auch anstelle der vorbeschriebenen, Detailierung der Öffnungszone 3 einfassenden Randabschnitte des Wandabschnittes 2 können auch andere Bestandteile der Kabeleinführung und vor allem auch die Verschlusssegmente 7, 7.1 bzw. die diese bildenden Verschlusssegmentteile 9, 9.1 der Rückhaltefunktionalität dienen.

Die Form der Öffnungszone 3 erlaubt es auch, mit Steckern ausgerüstete Kabel durch diese hindurchführen zu können.

Figur 3 zeigt eine Hohlwanddose 14 mit einem an den üblichen zylindrischen Dosenkörper 15 angeformte Gehäusevergrößerung 16. Der Boden 17 der Gehäusevergrößerung 16 ist mit zwei Kabeleinführungen 1, wie vorstehend beschrieben, ausgerüstet.

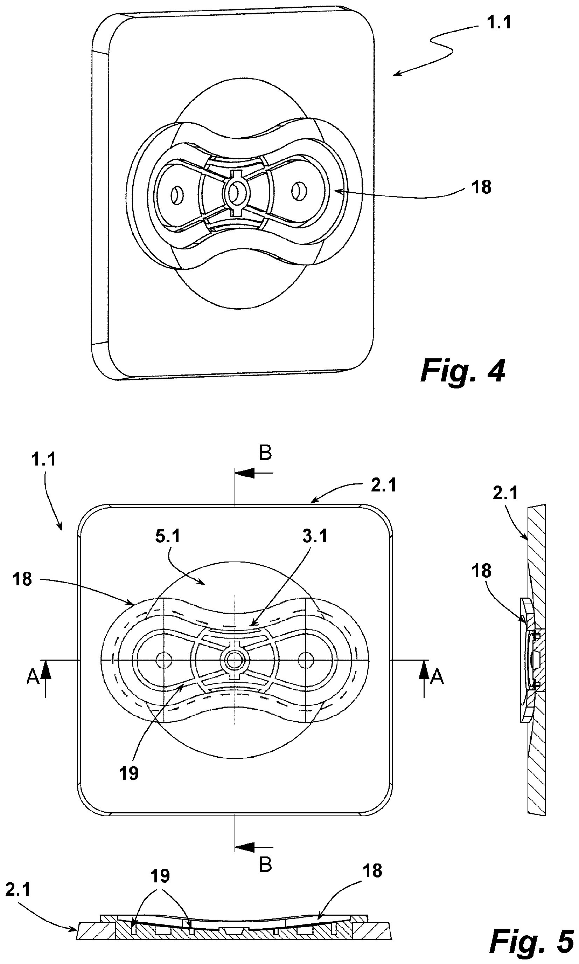

In Figuren 4 und 5 ist eine weitere Kabeleinführung 1.1 dargestellt, deren Öffnungszone 3.1 eine ähnliche Umrissgeometrie aufweist wie die Öffnungszone 3 der Kabeleinführung 1. Der Wandabschnitt 2.1 ist ebenso ausgebildet wie der Wandabschnitt 2, weshalb die diesbezüglichen Ausführungen auch für den Wandabschnitt 2.1 und gleichermaßen auch für die Wandabschnitte der weiteren Ausführungsbeispiele gelten. Die Kabeleinführung 1.1 unterscheidet sich von derjenigen der vorangegangenen Figuren dadurch, dass die Öffnungszone 3.1 durch eine elastische Weichkunststoffmembran 18 verschlossen ist. Diese überspannt die Öffnungszone 3.1 und ist an die die Öffnungszone 3.1 einfassenden Randabschnitte des Wandabschnittes 2.1 angeschlossen, wie dieses aus den Schnittdarstellungen der Figur 5 erkennbar ist. In Figur 5 ist der Umriss der Öffnungszone, da von der Weichkunststoffmembran 18 überdeckt, gestrichelt dargestellt. Die Weichkunststoffmembran 18 folgt der konkaven Form der Einmuldung 5.1 des Wandabschnittes 2. Die Weichkunststoffmembran 18 ist durch darin eingebrachte Nuten 19 strukturiert. Diese umfassen Aus- bzw. Einreißbereiche innerhalb der Öffnungszone 3.1 der bzw. die von einer solchen Nut 19 eingefassten Bereiche können ohne Weiteres aus der Weichkunststoffmembran aufgrund der auf diese Weise gebildeten Solltrennstellen herausgetrennt werden. In Abhängigkeit von der Größe bzw. Dimensionierung eines durch die Kabeleinführung 1.1 einzuführenden Kabels werden ein oder mehrere dieser Verschlusssegmentteile aus der Weichkunststoffmembran herausgetrennt.

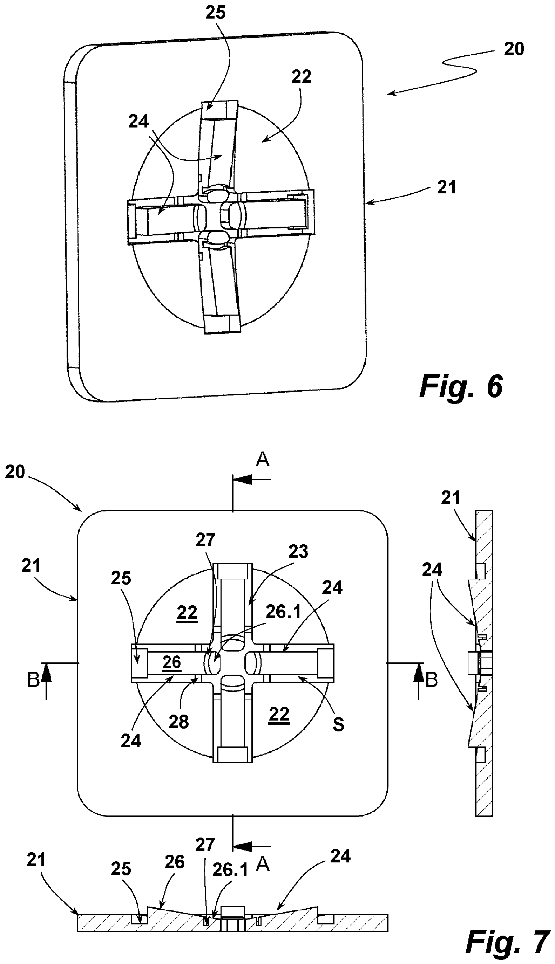

Figuren 6 und 7 zeigen ein drittes Ausführungsbeispiel einer Kabeleinführung 20. Der Wandabschnitt 21 dieser Kabeleinführung 20 weist ebenfalls eine Einmuldung 22, wie diese bereits zu dem Ausführungsbeispiel der Figuren 1 und 2 beschrieben worden ist, auf. Bei der Kabeleinführung 20 ist die Öffnungszone 23 nach Art eines Kreuzes ausgeführt. Diese Umrissgeometrie der Öffnungszone 23 ergibt sich durch die Zusammenstellung von vier einzelnen Formelementen, wobei jedes dieser Formelemente einen Ast des Kreuzes bildet. Diese Formelemente weisen wiederum eine Langachse (in Richtung des Schnittes B-B verlaufend) und eine hierzu quer verlaufende Kurzachse (in Richtung des Schnittes A-A verlaufend) auf. Jedes Formelement der Öffnungszone 23 ist durch ein Verschlusssegment 24 verschlossen. Die Verschlusssegmente 24 sind prinzipiell aufgebaut wie die Verschlusssegmente 7, 7.1 der Kabeleinführung 1 und verfügen jeweils über ein mittels eines Filmscharniers 25 an den Wandabschnitt 21 angeschlossenes Verschlusssegmentteil 26 und ein daran durch ein Filmscharnier 27 angeschlossenes Verschlusssegmentteil 26.1. Die Verschlusssegmente 24 sind durch Trennstege 27 an den Wandabschnitt 21 angeschlossen. Beim Einführen eines dünneren Kabels werden nur die innenliegenden Verschlusssegmentteile 26.1 nach innen eingeklappt und stellen die für die Rückhaltefunktion benötigten Rückhalteelemente dar. Beim Einführen von im Durchmesser größeren Kabeln dienen Randbereiche der Einmuldung 22 der Rückhaltefunktionalität, wie dieses vorstehend anhand der Figur 2a beschrieben ist.

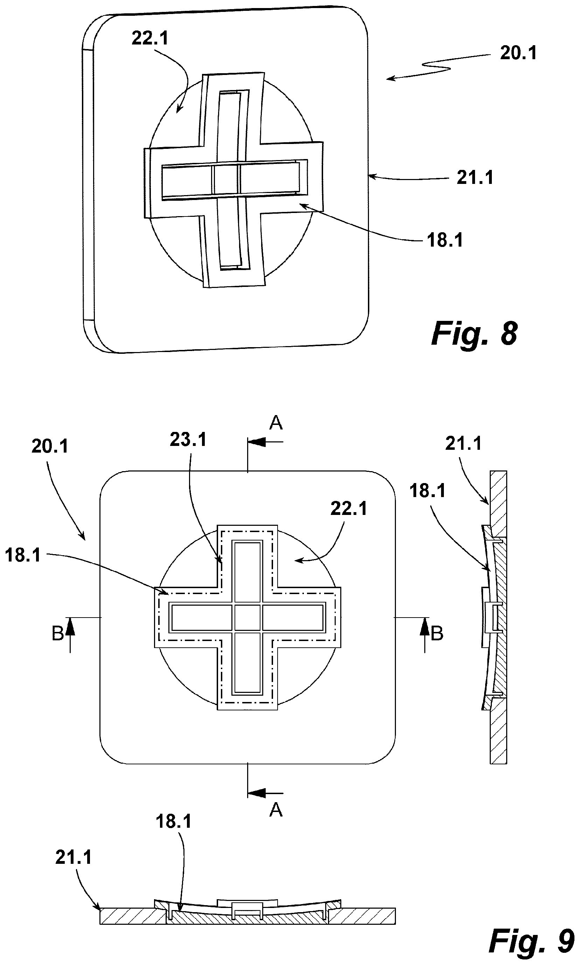

Figuren 8 und 9 zeigen eine weitere Ausgestaltung einer Kabeleinführung 20.1, bei der der Wandabschnitt 21.1 ebenfalls in seiner Einmuldung 22.1 eine von ihrer Geometrie her kreuzförmige Öffnungszone 23.1 aufweist. Die Öffnungszone 23.1 ist durch eine Weichkunststoffmembran 18.1 (s. Figur 9) verschlossen. Diese ist, wie dieses zu der Weichkunststoffmembran 18 vom Prinzip her beschrieben ist, strukturiert, um Langgüter unterschiedlicher Geometrie bzw. Größe einführen zu können, je nachdem wie viel von der Öffnungszone 23.1 zum Einführen eines solchen Langgutes freigegeben werden muss.

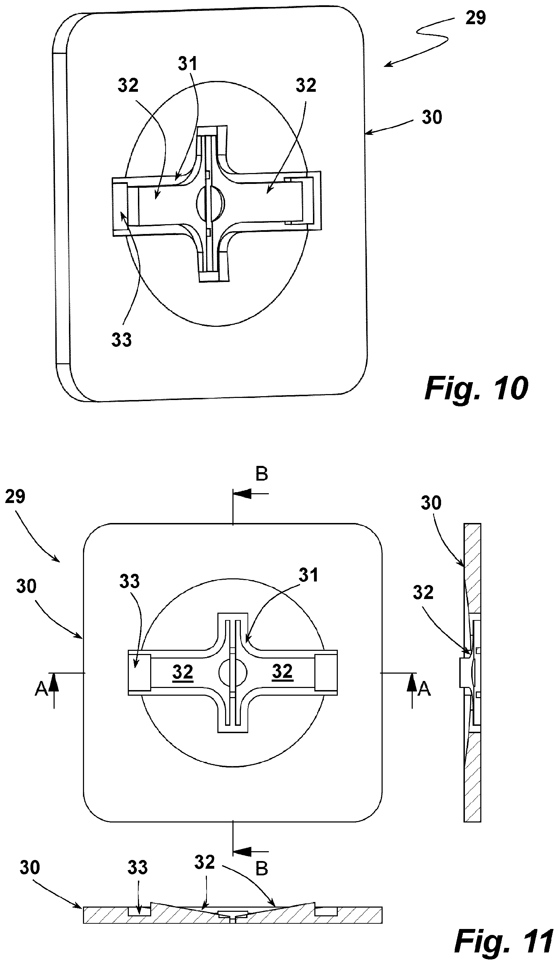

Figuren 10 und 11 zeigen noch ein weiteres Ausführungsbeispiel einer Kabeleinführung 29, die bezüglich ihres Wandabschnittes 30 ebenso ausgeführt ist wie die vorbeschriebenen Kabeleinführungen der Figuren 6 und 7. Die Kabeleinführung 29 unterscheidet sich durch die Geometrie ihrer Öffnungszone 31. Die Öffnungszone 31 der Kabeleinführung 29 ist ebenfalls kreuzförmig ausgelegt und somit ähnlich zu der Öffnungszone 23 der Kabeleinführung 20. Die kreuzförmige Ausgestaltung der Öffnungszone 31 ist asymmetrisch bezüglich ihrer einzelnen Äste. Aus diesem Grund sind bei der Kabeleinführung 29 auch nur zwei Verschlusssegmente 32 vorgesehen. Jedes Verschlusssegment 32 füllt einen Teil des quer zur Längserstreckung der Öffnungszone 31 verlaufenden Äste. Wie auch bei den anderen, gegenüber dem Wandabschnitt 30 einklappbaren Verschlusssegmenten sind auch die Verschlusssegmente 32 unter Zwischenschaltung jeweils eines Filmscharniers 33 an den Wandabschnitt 30 angeschlossen. Die beiden Verschlusssegmente 32 sind mittels zweier Trennstege miteinander verbunden.

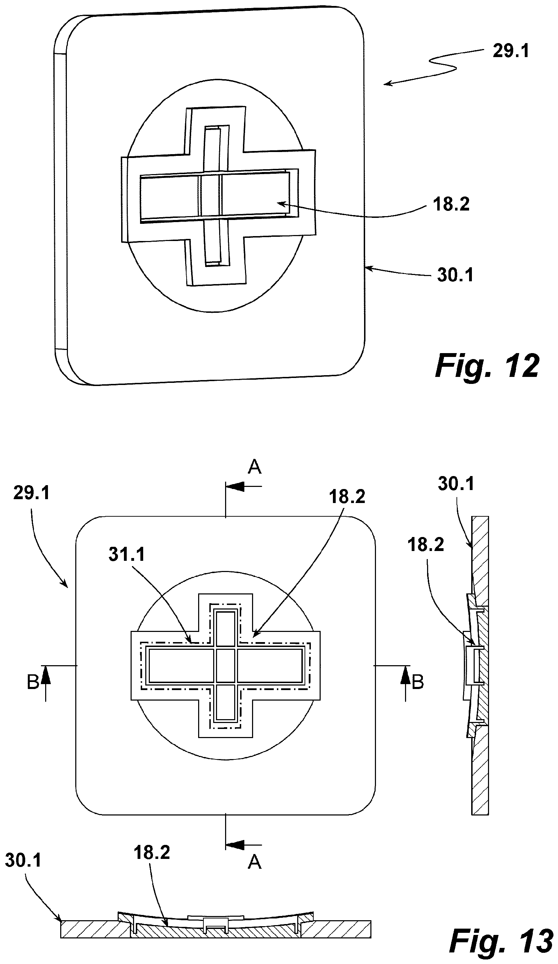

Figuren 12 und 13 zeigen eine Kabeleinführung 29.1, deren Öffnungszone 31.1 dieselbe Form hat wie die Öffnungszone 31 der Kabeleinführung 29. Verschlossen ist diese durch eine strukturierte Weichkunststoffmembran 18.2. Die Strukturierung der Weichkunststoffmembran 18.2 entspricht vom Prinzip her der Strukturierung der Weichkunststoffmembran 18.1 der Kabeleinführung 20.1. Die Öffnungszone 31.1 ist in Figur 13' strich-punktiert kenntlich gemacht.

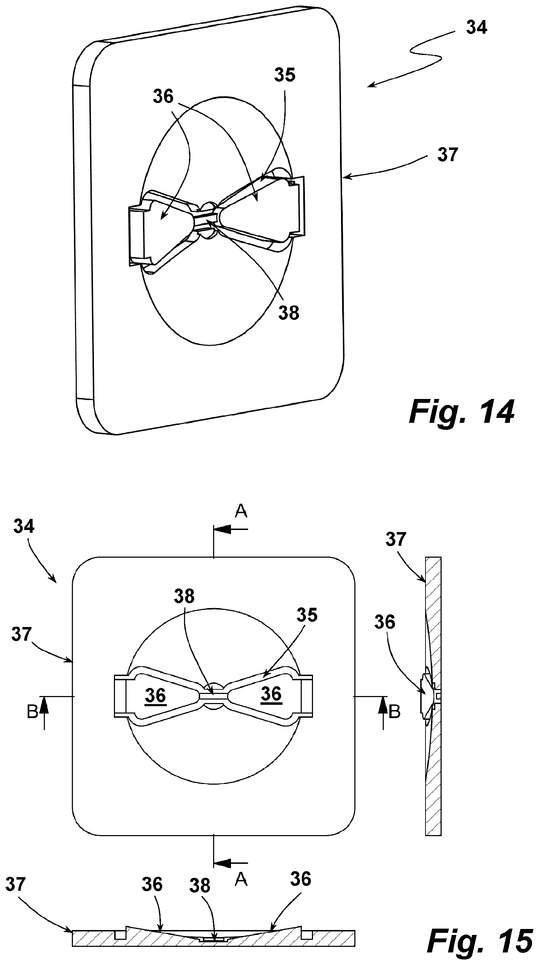

Noch ein weiteres Beispiel einer Kabeleinführung 34 zeigen Figuren 14 und 15. Die Öffnungszone 35 ist wiederum durch zwei sich ergänzende Formelente gebildet. Jedes der Formelemente ist nach Art eines Dreieckes ausgeführt. Die Öffnungszone 35 ist wiederum durch zwei Verschlusssegmente 36 verschlossen, die ebenfalls unter Zwischenschaltung jeweils eines Filmscharniers an den Wandabschnitt 37 der Kabeleinführung 34 angeschlossen sind. Bei diesem Ausführungsbeispiel sind die Verschlusssegmente 36 nicht unterteilt. Die zueinander weisenden Spitzen der Verschlusssegmente sind durch einen Trennsteg 38 miteinander verbunden. Im Bereich der Taillierung der Öffnungszone sind im Zentrum der Einmuldung die die Öffnungszone einfassenden Randabschnitte des Wandabschnittes 37 durch einen materialverdünnten Absatz mit kreissegmentförmiger Umrissgeometrie gebildet. Dieser Bereich ist zum Einführen von im Durchmesser dünnerer Kabel vorgesehen. Durch diese weitere Materialverdünnung ist ein nach innen ausstellen dieser Abschnitte des Randes mit geringerer Kraft möglich.

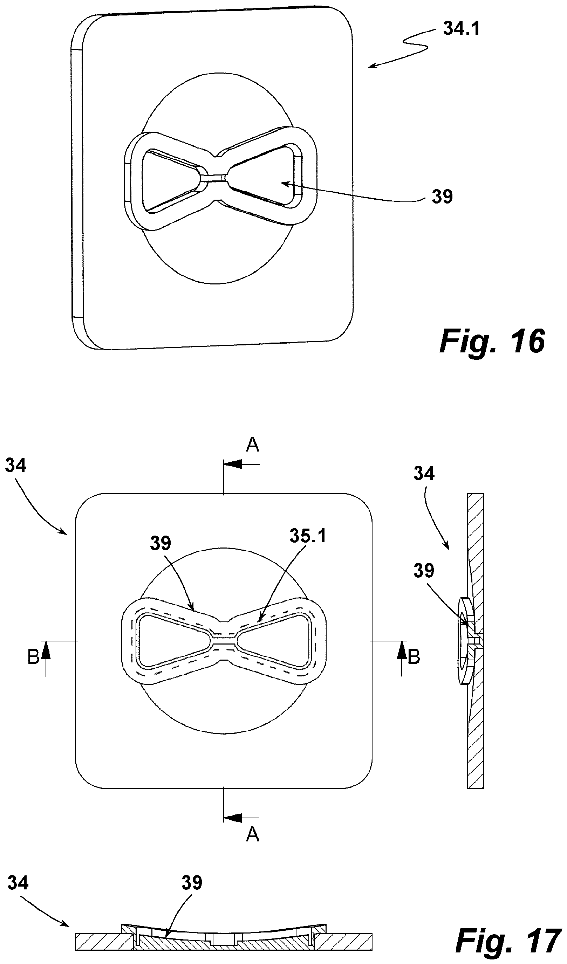

Figuren 16 und 17 zeigen eine weitere Kabeleinführung 34.1, deren Öffnungszone 35.1 (in Figur 17 gestrichelt dargestellt) durch eine Weichkunststoffmembran 39 verschlossen ist. Diese ist ebenso strukturiert wie die Weichkunststoffmembranen der bereits vorbeschriebenen Kabeleinführungen, um Ausreißzonen bereitzustellen, so dass in Abhängigkeit von der Geometrie und/oder Dimensionierung eines einzuführenden Langgutes eine entsprechende Einführöffnung bereitgestellt werden kann.

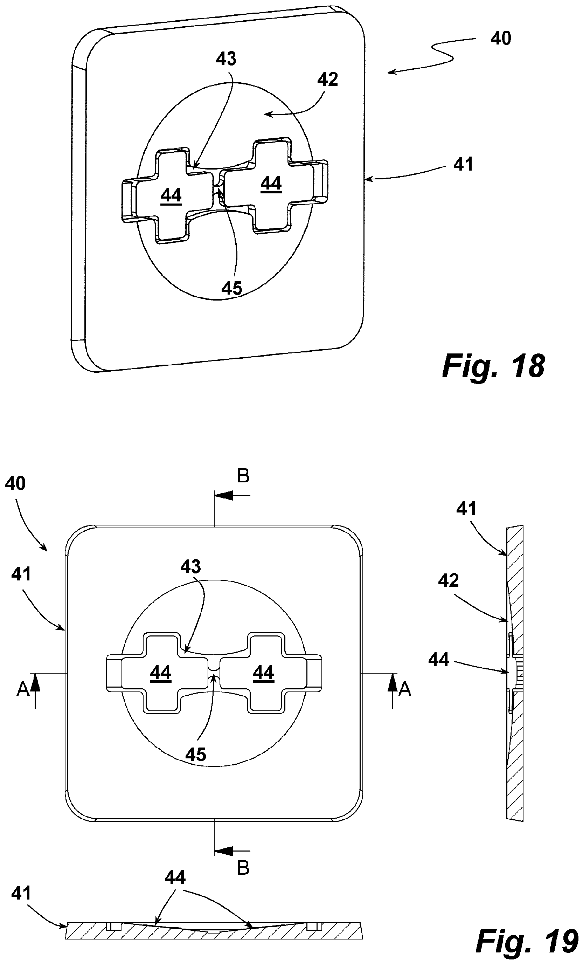

Noch eine weitere Kabeleinführung 40 ist in Figuren 18 und 19 gezeigt. Der Wandabschnitt 41 der Kabeleinführung 40 ist ausgebildet wie bei den vorbeschriebenen Ausführungsbeispielen. In seiner Einmuldung 42 befindet sich die Öffnungszone 43. Die Öffnungszone 43 ist nach Art eines Doppelkreuzes ausgeführt, wobei die beiden einzelnen Formelemente nebeneinanderliegend angeordnet sind. Entsprechend gestaltet sind die Verschlusssegmente 44, die wiederum unter Zwischenschaltung eines Filmscharniers an den Wandabschnitt 41 angeschlossen sind. Beide Verschlusssegmente 44 sind mittels eines Trennsteges 45 an ihren zueinander weisenden Enden miteinander verbunden.

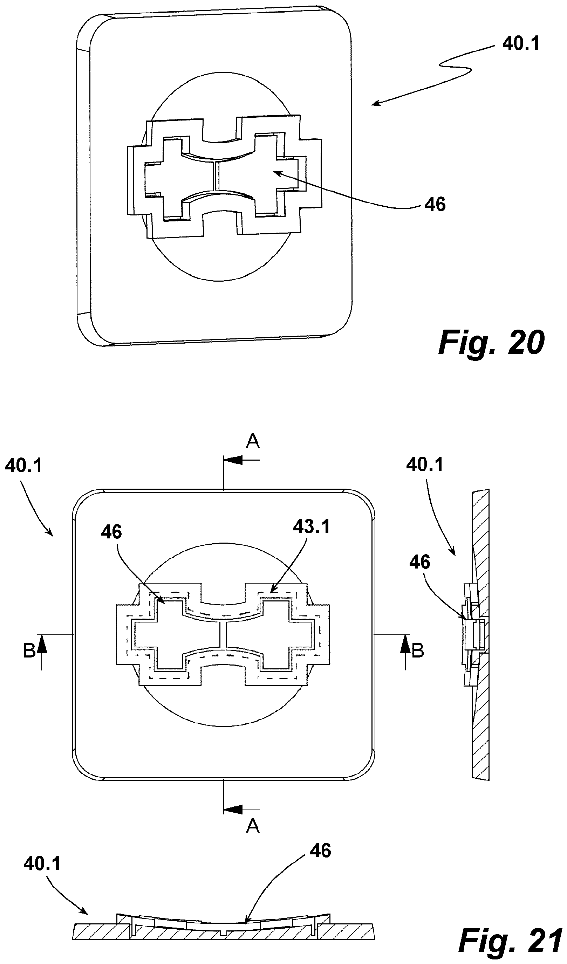

Die in Figuren 20 und 21 gezeigte Kabeleinführung 40.1 verwendet zum Verschließen ihrer doppelkreuzförmigen Öffnungszone 43.1 eine elastische Weichkunststoffmembran 46. Diese ist, wie aus den Figuren ersichtlich, strukturiert, um einzelne Ausreißzonen bereitzustellen. Die Öffnungszone 43.1 ist in Figur 21 gestrichelt kenntlich gemacht.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen dargelegt werden müsste.

**Bezugszeichenliste**

| | | | |
|---|---|---|---|
| 1, 1.1 | Kabeleinführung | 32 | Verschlusssegment |
| 2, 2.1 | Wandabschnitt | 33 | Filmscharnier |
| 3, 3.1 | Öffnungszone | 34, 34.1 | Kabeleinführung |
| 4 | Außenseite | 35, 35.1 | Öffnungszone |
| 5 | Einmuldung | 36 | Verschlusssegment |
| 6, 6.1 | Formelement | 37 | Wandabschnitt |
| 7, 7.1 | Verschlusssegment | 38 | Trennsteg |
| 8 | Filmscharnier | 39 | Weichkunststoffmembran |
| 9, 9.1 | Verschlusssegmentteil | 40, 40.1 | Kabeleinführung |
| 10 | Filmscharnier | 41 | Wandabschnitt |
| 11 | Innenseite | 42 | Einmuldung |
| 12, 12.1 | Trennsteg | 43, 43.1 | Öffnungszone |
| 13 | Trennsteg | 44 | Verschlusssegment |
| 14 | Hohlwanddose | 45 | Trennsteg |
| 15 | Dosenkörper | 46 | Weichkunststoffmembran |
| 16 | Gehäusevergrößerung | S | Spalt |
| 17 | Boden | | |
| 18, 18.1, 18.2 | Weichkunststoffmembran | | |
| 19 | Nut | | |
| 20, 20.1 | Kabeleinführung | | |
| 21, 21.1 | Wandabschnitt | | |
| 22 | Einmuldung | | |
| 23 | Öffnungszone | | |
| 24 | Verschlusssegment | | |
| 25 | Filmscharnier | | |
| 26, 26.1 | Verschlusssegmentteil | | |
| 27 | Filmscharnier | | |
| 28 | Trennsteg | | |
| 29.29.1 | Kabeleinführung | | |
| 30 | Wandabschnitt | | |
| 31, 31.1 | Öffnungszone | | |

## Patentansprüche

1. Kabeleinführung für ein einer elektrotechnischen Installation dienendes Gehäuse, welche Kabeleinführung (1, 1.1, 34, 34.1) eine in einem eine Außenseite (4) und eine Innenseite (11) aufweisenden, insbesondere ungekrümmt ausgeführten Wandabschnitt (2, 2.1, 37) aus Kunststoff angeordnete Öffnungszone (3, 3.1, 35, 35.1) aufweist, wobei die unbenutzte Öffnungszone durch zumindest ein Verschlusssegment (7, 7.1, 18, 36, 39) verschlossen und dergestalt ausgelegt ist, damit bezüglich ihres Querschnittes unterschiedlich dimensionierte Kabel durch die Kabeleinführung (1, 1.1, 34, 34.1) hindurch und in ein solches Gehäuse eingeführt werden können, **dadurch gekennzeichnet, dass** die Öffnungszone (3, 3.1, 35, 35.1) bezüglich ihrer Formgebung aus zumindest einem durch eine Langachse und eine asymmetrisch zur Langachse angeordnete Kurzachse hinsichtlich seines Umrisses definierten Formelement (6, 6.1) gebildet ist.

2. Kabeleinführung für ein einer elektrotechnischen Installation dienendes Gehäuse, welche Kabeleinführung (20, 20.1, 29, 29.1, 40, 40.1) eine in einem eine Außenseite (4) und eine Innenseite (11) aufweisenden, insbesondere ungekrümmt ausgeführten Wandabschnitt (21, 21.1, 30, 41) aus Kunststoff angeordnete Öffnungszone (23, 23.1, 31, 31.1, 43, 43.1) aufweist, wobei die unbenutzte Öffnungszone durch zumindest ein Verschlusssegment (18.1, 18.2, 24, 32, 44, 46) verschlossen und dergestalt ausgelegt ist, damit bezüglich ihres Querschnittes unterschiedlich dimensionierte Kabel durch die Kabeleinführung (20, 20.1, 29, 29.1, 40, 40.1) hindurch und in ein solches Gehäuse eingeführt werden können, **dadurch gekennzeichnet, dass** die Öffnungszone (23, 23.1, 31, 31.1, 43, 43.1) bezüglich ihrer Formgebung aus zumindest zwei, jeweils durch ein durch eine Langachse und eine Kurzachse hinsichtlich seines Umrisses definierten Formelementen gebildet ist, welche Formelemente in Bezug auf ihre Langachse winklig zueinander angeordnet sind.

3. Kabeleinführung nach Anspruch 1 oder 2, **dadurch gekennzeichnet, dass** die Öffnungszone (3, 3.1, 23, 23.1, 31, 31.1, 35, 35.1, 43, 43.1) bezüglich ihrer Formgebung aus mehreren, sich zur Ausbildung derselben ergänzenden Formelementen (6, 6.1) dieser Art gebildet ist.

4. Kabeleinführung nach einem der Ansprüche 1 bis 3, **dadurch gekennzeichnet, dass** die Öffnungszone (3, 3.1, 35, 35.1, 43, 43.1) zwei Öffnungszonenbereiche mit jeweils einem durch eine Langachse und zumindest eine Kurzachse definierten Umriss aufweist, wobei die lichte Weite eines solchen Öffnungszonenbereiches quer zur Erstreckung seiner Langachse ausgehend von einer maximalen lichten Weite in Richtung zu einem Ende hin abnimmt, und die Öffnungszonenbereiche ineinander übergehen und zueinander angeordnet sind, damit die bezüglich der lichten Weite verjüngten Endbereiche der beiden Öffnungszonenbereiche zueinander weisen und die Langachsen dieser Öffnungszonenbereiche miteinander fluchten, so dass die lichte Weite der Öffnungszone quer zu ihrer Längserstreckung tailliert ist.

5. Kabeleinführung nach einem der Ansprüche 1 bis 4, **dadurch gekennzeichnet, dass** die Öffnungszone (3, 3.1, 23, 23.1, 31, 31.1, 35, 35.1, 43, 43.1) zumindest weitgehend in einer Einmuldung (5, 5.1, 22, 42) der Außenseite des Wandabschnittes angeordnet ist.

6. Kabeleinführung nach Anspruch 5, **dadurch gekennzeichnet, dass** die Einmuldung (5, 5.1, 22, 42) durch eine Materialverdünnung des Wandabschnittes (2, 2.1, 21, 21.1, 30, 37, 41) bereitgestellt ist.

7. Kabeleinführung nach einem der Ansprüche 1 bis 6, **dadurch gekennzeichnet, dass** das zumindest eine Verschlusssegment (7, 7.1, 26, 32, 36, 44) materialeinheitlich zu demjenigen des angrenzenden Wandabschnittes (2, 21, 30, 37, 41) ist und jedes Verschlusssegment (7, 26, 36, 44) nur mit einem Ende seiner Erstreckung entlang der Langachse der Öffnungszone (3, 23, 31, 35, 43) mittels eines insbesondere als Materialverdünnung nach Art eines Filmscharniers ausgeführtes Scharniers (8, 25, 33) an den Wandabschnitt (2, 21, 30, 37, 41) angeschlossen ist, so dass dieses Verschlusssegment (7, 26, 36, 44) zum Zwecke einer Kabeleinführung zur Innenseite des Wandabschnittes (2, 21, 30, 37, 41) hin einklappbar ist.

8. Kabeleinführung nach Anspruch 7, **dadurch gekennzeichnet, dass** das zumindest eine Verschlusssegment (7, 7.1, 24) in zwei oder mehr, durch zwischengeschaltete, insbesondere nach Art von Filmscharnieren ausgeführte Scharniere (10, 27) gegeneinander verstellbare Verschlusssegmentteile (9, 9.1, 26, 26.1) unterteilt ist.

9. Kabeleinführung nach einem der Ansprüche 7 oder 8, **dadurch gekennzeichnet, dass** das zumindest eine Verschlusssegment (7, 7.1, 24) neben seiner Anbindung mittels des Scharniers (8, 25) an den Wandabschnitt (2, 21) durch zumindest einen als Solltrennstelle ausgeführten Trennsteg (12, 12.1, 28) mit dem Wandabschnitt (2, 21) verbunden ist.

10. Kabeleinführung nach einem der Ansprüche 1 bis 6, **dadurch gekennzeichnet, dass** das zumindest eine Verschlusssegment als die Öffnungszone überspannende Weichkunststoffmembran (18, 18.1, 18.2, 39, 46) ausgeführt ist.

11. Kabeleinführung nach Anspruch 10, **dadurch gekennzeichnet, dass** die flächige Erstreckung der Weichkunststoffmembran (18, 18.1, 18.2, 39, 46) durch in die Weichkunststoffmembran (18, 18, 18.1, 18.2, 39, 46) eingebrachte Nuten (19) zum Bereitstellen von einzeln nutzbaren Verschlusssegmentbereichen strukturiert ist.

12. Kabeleinführung nach einem der Ansprüche 1 bis 14, insbesondere als Teil eines einer elektrotechnischen Installation dienenden Gehäuses, etwa einer Installations- oder Abzweigdose, mit einem darin von der Außenseite des Wandabschnittes durchzuführenden Kabel, **dadurch gekennzeichnet, dass** die Querschnittsgeometrie der Öffnungszone (3, 3.1, 23, 23.1, 31, 31.1, 35, 35.1, 43, 43.1) oder eines Öffnungszonenbereiches an die Querschnittsgeometrie des hindurchzuführenden Kabels dergestalt angepasst ist, dass zumindest in einem Abschnitt des Kabels dieses einen größeren Durchmesser aufweist als die an der Positionierung des Kabels in der Öffnungszone (3, 3.1, 23, 23.1, 31, 31.1, 35, 35.1, 43, 43.1) oder dem Öffnungszonenbereich vorhandene lichte Weite, so dass beim Durchstecken des Kabels durch die Kabeleinführung ein Abschnitt des die Öffnungszone (3, 3.1, 23, 23.1, 31, 31.1, 35, 35.1, 43, 43.1) einfassenden Materials des Wandabschnittes (2, 2.1, 21, 21.1, 30, 37, 41) zur Innenseite (11) des Wandabschnittes (2, 2.1, 21, 21.1, 30, 37, 41) hin ausgestellt wird und an widerhakenartig der Mantelfläche des hindurchgesteckten Kabels anliegt.

13. Kabeleinführung nach einem der Ansprüche 1 bis 12, **dadurch gekennzeichnet, dass** die Kabeleinführung ein eigenständiges Bauteil für eine einer elektrotechnischen Installation dienenden Gehäuses, etwa einer Installations- oder Abzweigdose ist und in einer in dem Gehäuse vorbereiteten Kabeleinführungsöffnung fixiert ist.

14. Kabeleinführung nach Anspruch 13, **dadurch gekennzeichnet, dass** die Kabeleinführungsteile, in ihrer Zusammenstellung die Kabeleinführung bildend, in einer Kabeleinführungsöffnung eines einer elektrotechnischen Installation dienenden Gehäuses zusammengehalten sind.

15. Kabeleinführung nach Anspruch 14, **dadurch gekennzeichnet, dass** die Kabeleinführungsteile zueinander komplementäre Verbindungsglieder zum mechanischen Verbinden derselben miteinander zum Bereitstellen der in eine Kabeleinführungsöffnung eines einer elektrotechnischen Installation dienenden Gehäuses einsetzbaren Kabeleinführung tragen.
